# EUROPEAN PATENT APPLICATION

(11) **EP 3 348 653 A1**
(43) Date of publication of application: **18.07.2018**
(21) Application number: 18151318.5
(22) Date of filing: 12.01.2018
(51) Int. Cl.: C14B 7/02, B29C 43/20, B29C 51/08, B29C 51/12, B29C 51/14

(54) **METHOD FOR MANUFACTURING A LEATHER-COATED THREE-DIMENSIONAL OBJECT AND A LEATHER-COATED THREE-DIMENSIONAL OBJECT**

(30) Priority: 12.01.2017 FI 20175024
(71) Applicant: KO-HO Industrial Design Oy, 66300 Jurva (FI)
(72) Inventor: KORPELA, Matti, 60120 Seinäjoki (FI); HOISKO, Timo, 60200 Seinäjoki (FI)
(74) Representative: Berggren Oy, Helsinki & Oulu

(57) **Abstract**

A method for manufacturing a leather-coated three-dimensional (3D) object (299) and leather-coated 3D objects are presented. The method comprises obtaining (110) a body sheet (210) and a leather coating sheet (205), heating (120) the body sheet (210), stacking (130) the heated body sheet (210) and the leather coating sheet (205) to obtain a multilayer structure (225), inserting (140) the structure (225) to a form press, and forming (150) the inserted structure (225) by applying a force by the form press, such as the hydraulic press, to said structure (225) to form it into a three-dimensional shape defined by the mould (230), wherein the forming comprises stretching the leather coating sheet (205) at least locally at one position for forming the leather coating sheet (205) to the three-dimensional shape, the method comprises, prior to the forming (150), heating at least one of the leather coating sheet (205) and the adhesive (220).

## Description

### TECHNICAL FIELD

The invention concerns in general the technical field of leather upholstery. Especially, however, not exclusively, the invention concerns manufacturing multilayer leather-coated three-dimensional (3D) objects.

### BACKGROUND

It is known to upholster 3D objects, such as sofas, couches or car interiors, with leather. Leather upholstery of 3D objects has typically been performed so that several pieces of leather are first cut into correct shapes and sizes using plans or patterns corresponding to the dimensions of the specific object to be upholstered. After the cutting, the pieces leather are stitched together to form the complete leather coating piece, which is then fitted on the body of the object, typically manually by a professional, an upholsterer, in order to obtain a high quality leather-coated product. The leather upholstery of an object often requires stitching the leather also to the body of the object.

In upholstering especially difficult are the parts of a 3D object exhibiting tight corners or high curvatures. For these, the leather must be properly shaped by stitching multiple pieces of leather together so that the leather is pre-shaped to the form or shape of the object to the upholstered.

The upholstery of a 3D object with leather is typically done manually and is, thus, labour-intensive. The finished product is typically relatively expensive. For a large 3D object exhibiting significant 3D shapes, such as a chair comprising parts having high curvature, the leather must be properly shaped before attaching it to the object for coating in order to obtain a high quality leather-coated chair. If the object comprises tight corners and/or parts having high curvature, the stiches or seams used for shaping the leather coating from the pieces of leather are visible on the leather coating of the finished product, particularly, in the seams or said corners. There is, thus, still a need to develop a method for manufacturing leather-coated 3D objects without a need for manual, labour-intensive phase which is typically performed by a professional having the necessary skills.

### SUMMARY

An objective of the present invention is to provide a method for manufacturing a leather-coated 3D object and leather-coated 3D objects. Another objective of the present invention is that the method for manufacturing a leather-coated 3D object and said objects at least alleviate the above-described problems associated with the manufacturing leather-coated 3D objects and the leather-coated 3D objects.

The objectives of the present invention are reached by a method and leather-coated 3D objects as defined by the respective independent claims.

According to a first aspect, a method for manufacturing a leather-coated three-dimensional object is provided. The method comprises
- obtaining a body sheet and a leather coating sheet,
- heating at least the body sheet,
- stacking the heated body sheet and the leather coating sheet to obtain a multilayer structure, wherein the stacking comprises arranging an adhesive between the heated body sheet and the leather coating sheet,
- inserting the multilayer structure to a form press, such as a hydraulic press, comprising a mould for three-dimensional forming, and
- forming the inserted multilayer structure by applying a force by the form press, such as the hydraulic press, to said multilayer structure to form it into a three-dimensional shape defined by the mould, wherein the forming comprises stretching the leather coating sheet at least locally at one position for forming the leather coating sheet to the three-dimensional shape.

"Stretching" refers herein to an increase, at least locally, in the surface area of the leather coating sheet.

The method may comprise, prior to the forming, heating at least one of the leather coating sheet and the adhesive.

The method may comprise, prior to the forming, heating the stacked multilayer structure.

The method may comprise utilizing a seamless one-piece leather coating sheet for manufacturing the leather-coated three-dimensional object.

The part of the leather coating sheet to be formed may, preferably, have a surface area of at least a fourth of a square meter.

The depth of a cavity defined by the mould may, preferably, be at least ten centimetres. Therefore, the leather-coated 3D object may comprise a significant 3D shape or shapes in contrast to objects having only minor deviations from sheet-like characteristics.

The body sheet may comprise at least one of the following: polyester fibres, polyester felt, polyethylene terephthalate felt, polyethylene succinate felt, fibre-reinforced composite.

The leather coating sheet may comprise at least one of the following: leather, artificial leather, hide.

According to a second aspect, a leather-coated 3D object manufactured by the method according to the first aspect is provided.

According to a third aspect, a leather-coated three-dimensional object comprising a substantially rigid body layer and a seamless leather coating layer is provided. The substantially rigid body layer and the leather coating layer are attached to each other.

The seamless leather coating layer may, preferably, have a surface area of at least a fourth of a square meter.

The leather-coated three-dimensional object may comprise a plane defined by the edges of a cavity or recess of the 3D object, and a depth of said cavity or recess from said plane of at least 10 centimetres.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the present invention are illustrated by way of example, however, not by way of limitation, in the figures of the accompanying drawings, which are briefly described below.
Figure 1 illustrates a flow diagram of a method according to an embodiment of the present invention.
Figure 2 illustrates schematically a leather-coated 3D object manufactured by the method according to an embodiment of the present invention.
Figures 3A and 3B illustrate schematically a leather-coated 3D object according to an embodiment of the present invention.
Figures 4A and 4B illustrate schematically a leather-coated 3D object according to an embodiment of the present invention as viewed from two perspectives.
Figures 5A and 5B illustrate schematically a product, from two perspectives, in which a leather-coated 3D object according to an embodiment of the present invention has been utilized.
Figures 6A and 6B illustrate schematically products in which a leather-coated 3D object according to an embodiment of the present invention has been utilized.

### DESCRIPTION OF SOME EMBODIMENTS

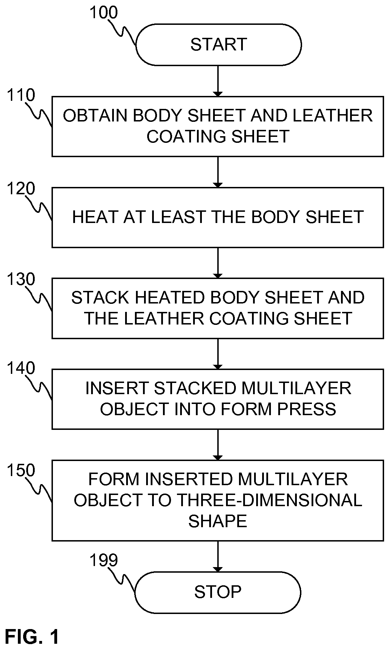

Figure 1 illustrates a flow diagram of a method according to an embodiment of the present invention. Item 100 refers to a start-up phase. At 100, the necessary tasks such as material and tools selection, acquisition, calibration and other configuration may take place. Specific care must be taken that the individual elements and material selections work together and survive the selected manufacturing process and possible target product whereto the structure may be disposed, which is naturally preferably checked up-front on the basis of the manufacturing process specifications and component data sheets, or by investigating and testing the produced prototypes, for example. Form press, heating equipment, such as ovens or microwave or infrared radiation based heating equipment, may be obtained. There may also be machinery obtained for producing vacuum or pressure, such as a vacuum pump or a compressor.

At 110, a body sheet and a leather coating sheet are obtained. The body sheet is preferably flexible and suitable to be formed, such as thermoformed. The body sheet may be, for example, polymer such as a polyethylene terephthalate (PET) felt or comprise at least one of the following: polyester fibres, polyester felt, PET, polyethylene succinate felt. The material of the body sheet may be, for example, fibre-reinforced composite, preferably reinforced by natural fibres, such as comprising flax or hemp, and polyester or, for example, PET or polypropylene or polylactic acid polyester. The polyester, for example, advantageously, acts as an adhesive within the material whereas the fibres for reinforcement, e.g. flax or hemp, act as the body. The leather coating sheet may be made of any type of leather, such as genuine leather, (cattle) hide, mocha leather, artificial leather, such as comprising plastic materials or, for example, Barktex®, etc.

The surface area of the obtained leather coating sheet may be, for example, at least 0.25 square metres, at least 0.50 square meters or at least one square metre. The surface area of the leather coating sheet should, nevertheless, be at least the size required for the surface area of the desired leather-coated 3D object when taking into account the amount of increase of the surface area of the leather coating sheet during the forming in step 150. According to an embodiment of the present invention, the surface area of the leather coating sheet is at least the area defined by the edges of the cavity for forming defined by the mould so that, preferably, the leather coating sheet may be attached to the mould or to a support so that formable multilayer structure remains substantially stationary with respect to the mould at least at the attaching points which are outside of the area defined by the cavity. The method according to an embodiment of the present invention is especially advantageous for 3D objects having surface area of at least 0.25 centimetres, i.e., for other than very small objects to be leather-upholstered.

At 120, at least the body sheet, such as a sheet of PET felt, is being heated. The heating may, preferable, comprise heating the body sheet to a temperature causing the body sheet to become rigid or solidifies after cooling down to, for example, a room temperature. According to an embodiment utilizing a PET felt as the body sheet, the temperature up to which the PET felt may be heated is, for example, in the range from 150 degrees Celsius to about 240 degrees Celsius, or advantageously, in the range from 180 degrees Celsius to about 235 degrees Celsius and, most advantageously, in the range from 210 degrees to about 230 degrees Celsius.

The temperature up to which the body sheet may be heated depends on the used material and it is important that the temperature is such that, in the case the body sheet comprises polyester fibres, said polyester fibres do not form droplets. The body sheet 210 may be heated up to a temperature at which polymerization occurs at least to some degree for the body sheet 210, thus, turning rigid after cooling down sufficiently, for example, to a room temperature or to at least to 67 to 80 degrees Celsius for PET.

At 130, the heated body sheet is stacked with the leather coating sheet, wherein the stacking comprises arranging adhesive between the heated body sheet and the leather coating sheet for attaching the sheets together to form a multilayer structure. The adhesive may be, for example, glue or an adhesive layer or sheet. The adhesive may be, for example, temperature- or pressure-sensitive adhesive. According to some embodiments of the present invention, there may also be additional layers between the body sheet and the leather coating sheet, for example, a fabric layer. There may be, for example, adhesive arranged on both sides of the fabric layer or the adhesive may be incorporated onto or into the fabric layer.

According to an embodiment of the present invention, step 130, i.e., the stacking 130 may be performed prior to step 120, i.e., the heating 120. According to this embodiment, the body sheet, the leather coating sheet and the adhesive between said sheets are all heated simultaneously.

At 140, the stacked multilayer structure or object is inserted into a form press, such as a hydraulic press or one utilizing negative or positive pressure for forming the inserted object. The multilayer structure or object may be, preferably, inserted into a form press comprising a mould defining the desired 3D shape, such as in the form of a cavity or a set of cavities, into which the multilayer structure is to be formed. The depth 245 of a cavity with respect to at least one position defined by the mould at which the multilayer structure is inserted for forming may be, for example, at least 10 centimetres, 20 centimetres or even 30 centimetres. The inserting may comprise attaching the multilayer structure, preferably, to the mould or a support so that the multilayer is substantially stationary with respect to the mould at least at the attaching points which are outside to area defined by the edges of the cavity during the forming, i.e. during step 150. According to an embodiment, the attaching may, preferably, be done at positions of the leather coating sheet which are to be removed after the forming.

At 150, the inserted multilayer structure is being formed into the desired 3D shape by applying pressure, such as negative or positive pressure, by a piston of the hydraulic press or by a vacuum or a compressor. The applied pressure forms the inserted multilayer structure, i.e. at least the body sheet and the leather coating sheet into the desired 3D shape simultaneously, thus, producing a leather-coated 3D object.

According to an embodiment of the present invention, utilizing negative or positive air pressure for molding the multilayer structure into a 3D shape may require using a sheet, preferably substantially air impermeable sheet, especially in a case where the multilayer structure is air permeable, such as due to its materials or due to holes, in order to mitigate or prevent air leakage and facilitate the use of the negative or positive air pressure for molding.

According to an embodiment of the present invention, the forming comprises forming the stacked multilayer structure to a 3D shape requiring stretching of the body sheet and the leather coating sheet in order to obtain the desired 3D shape. Said sheets are, thus, being stretched at least locally at one position for forming the multilayer structure into the desired 3D shape resulting in a seamless leather coating layer for the manufactured leather-coated 3D object despite, in some cases, significant curvatures or corners comprised in said object. In addition to the obtained seamless leather coating layer, the leather coating layer may, advantageously, be unwrinkled, i.e., completely single-layered.

At 199, the method execution is ended. The leather-coated 3D may be taken out of the form press, preferable, once the adhesive has attached at least the body sheet and the leather coating sheet of the multilayer structure to each other sufficiently. This may require, for example, maintaining the formed multilayer structure inside the mould for it to cool down sufficiently, or after the adhesive has have enough time to marry the corresponding sheet or objects. At 199, there may also be a need to remove excessive part or parts of the multilayer structure with respect to the leather-coated 3D objects.

According to some embodiments of the present invention, at least one of the leather coating sheet and the adhesive may be heated, for example, prior to the forming, i.e., step 150. Heating the adhesive may activate the adhesive, depending on the type of adhesive. The heating of the leather coating sheet may, advantageously, further facilitate the stretching of the leather during the forming. According to various embodiments of the present invention, the leather coating sheet may be stitched and/or carved and/or stamped, for example, for decorative purposes. The stitching and/or carving and/or stamping may occur prior to the obtaining the leather coating sheet, or prior to the stacking or forming, or after the forming of the multilayer structure, for example.

According to an embodiment of the present invention, the mould may be heated in order to further facilitate the forming of the multilayer structure in step 150.

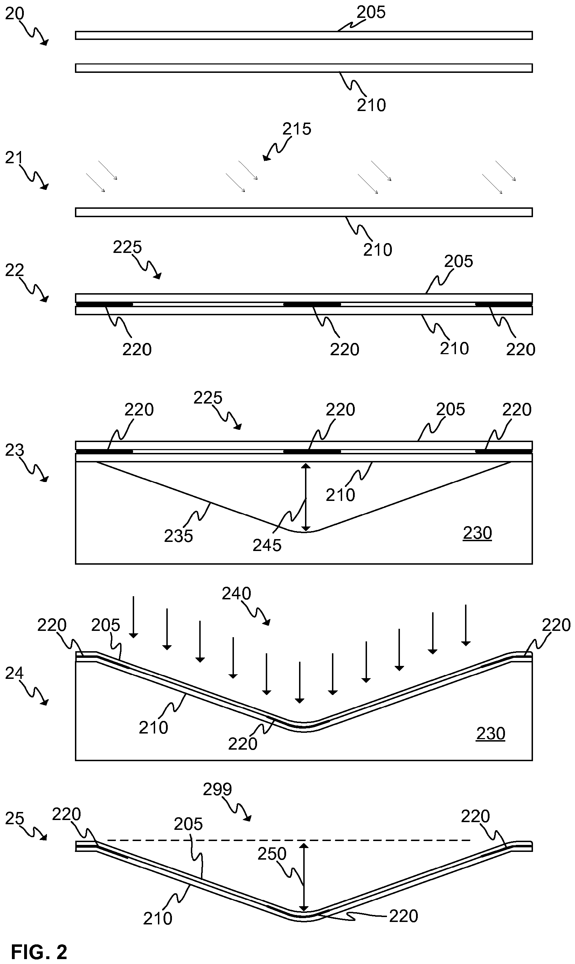

Figure 2 illustrates schematically a leather-coated 3D object 299 manufactured by the method according to an embodiment of the present invention. A leather coating sheet 205 and a body sheet 210, such as, a PET felt, are obtained and shown at 20. At 21, the body sheet 210 is being heated, for example, in an oven or a microwave oven or an infrared oven. Convection, such as warm air 215, or radiation, such as infrared 215, may be utilized for heating the body sheet 210. At 22, according to the particular embodiment, the warmed body sheet 210 and the leather coating sheet 205 are stacked, and an adhesive 220 is arranged between the body sheet 210 and the leather coating sheet 205 for facilitating the attachment of said sheets together. At 23, the stacked multilayer structure 225 is inserted into a form press comprising a mould 230. The mould, such as female part of the mould 230, may comprise a cavity surface 235 defining the desired 3D shape, i.e. at least part of a cavity, having a depth 245, for forming the multilayer structure 225. At 24, pressure 240 is applied to form the multilayer structure 225, preferably, into the shape defined by the cavity. The pressure 240 may be produced, for example, by a piston or movable male part of the mould corresponding to the shape of the female part 230. According to some embodiments of the present invention, the pressure may be produced by negative or positive pressure, such as vacuum or positive air pressure, respectively. At 25, the leather-coated 3D objects 299 may be taken out of the mould 230. The depth 245 of the cavity or recess may be, for example, at least 10 centimetres, 20 centimetres or even 30 centimetres, which means that the 3D object is characterized by significant 3D shape(s) 250 and not just small deviations, such as, in case of a depth 245 of the cavity of less than 5 centimetres.

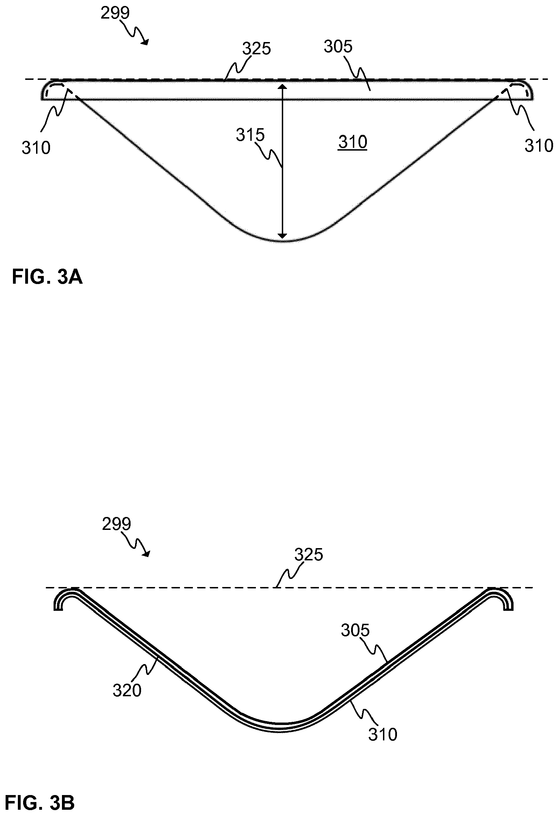

Figure 3A illustrates a leather-coated 3D object 299 according to an embodiment of the present invention comprising at least the body layer 310, such as of PET or fibre-reinforced composite, and the leather coating layer 305. Said object 299 is shown in Fig. 3A from the side, i.e. a side view, such that the cavity or recess comprised in said object 299 is accessible from above. As can be seen, the body layer 310 is mostly visible from the perspective in Fig. 3A, and the parts marked with dashed lines are hidden beneath the leather coating layer 310 from this particular view. With regard to the leather coating layer 310, i.e. leather coating of the 3D object 299, only the edge of said coating layer 305 is visible because most of the leather coating layer 305 is in the recess of the 3D object 299. The depth 315 of the recess may be, for example, at least 10 centimetres, 20 centimetres or even 30 centimetres, thus, having a significant 3D shape.

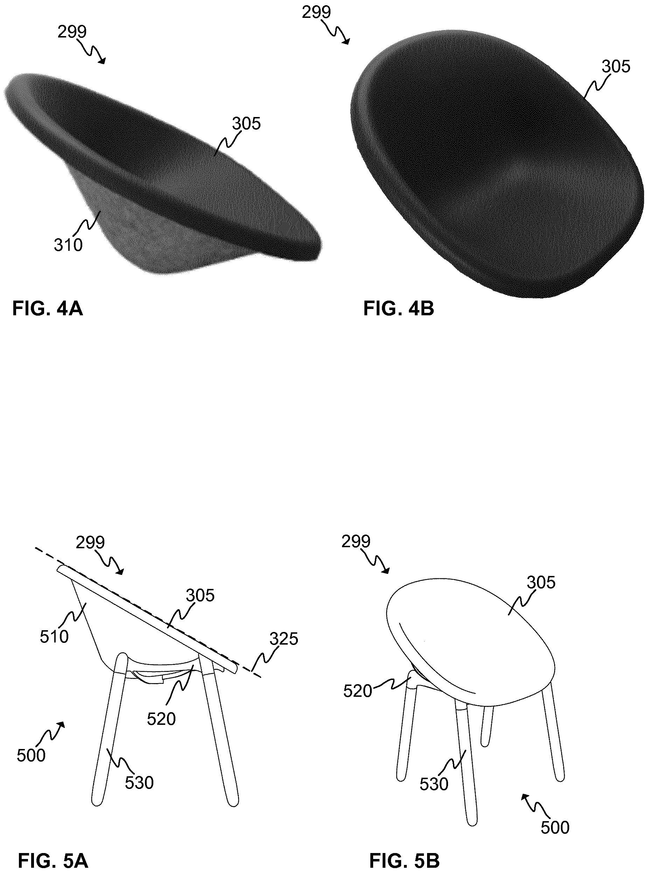

Figure 3B illustrates a sectional view of the leather-coated 3D object 299 from the same perspective as in Fig. 3A. The sectional view is taken substantially along the centre line (not shown) of said 3D object 299. As can be seen in Fig. 3B, the leather-coated 3D object comprises, according to this particular embodiment, two substantially similarly formed layers, the body layer 310 and the leather coating layer 305. Preferably, there is an adhesive layer 320 arranged between the body layer 310 and the leather coating layer 305 attaching these two layers together. Figs. 3A and 3B illustrate a similar object 299, however, not necessarily identical, compared to the object 299 shown in Figs. 4A and 4B.

According to an embodiment of the present invention, the 3D object 299 comprises a plane 325 defined by the edges of the cavity or recess of the 3D object 299. The depth 315 of the cavity or recess is defined as the greatest direct distance in the direction perpendicular to the plane 325 and from the plane 325 to the formed leather-coated 3D object. The plane 325 may exist, if the 3D object 299 was manufactured by using a form press comprising a mould having such plane parallel to the plane 235 defined by the edges of the cavity or recess of the 3D object 299. The depth 315 of the recess may be, for example, at least 10 centimetres, 20 centimetres or even 30 centimetres and, therefore, the 3D object has a significant 3D shape.

Figures 4A and 4B illustrate a leather-coated 3D object 299 according to an embodiment of the present invention from two perspectives. As can clearly be seen, the leather coating layer 305 attached to the body layer 310, in this case PET felt layer 310, is made of a single piece of leather. The leather coating layer 305 is seamless and, optionally, as is the case in Figs. 4A and 4B, unwrinkled. There are no seams or stitches even at the corners or positions with high curvature inside the cavity or recess, i.e., on the surface of the leather coating layer 305 in the recess, or at the areas of the edges. However, there may be stitches and/or carvings and/or stampings on the leather coating layer 305, for example, for decorative purposes, in accordance with the present invention.

The leather-coated 3D object 299 according to various embodiments may be a product of its own and utilizable as such. However, said object 299 may also be used as a part of a product, such as shown in Figs. 5A and 5B. The figures illustrate utilization of a leather-coated 3D object 299 in accordance with the present invention, such as a 3D object somewhat similar to the object 299 illustrated in Figs. 4A and 4B, in a product 500, such as a piece of a furniture 500, in this particular case, a chair 500. The product 500 is shown from two perspectives.

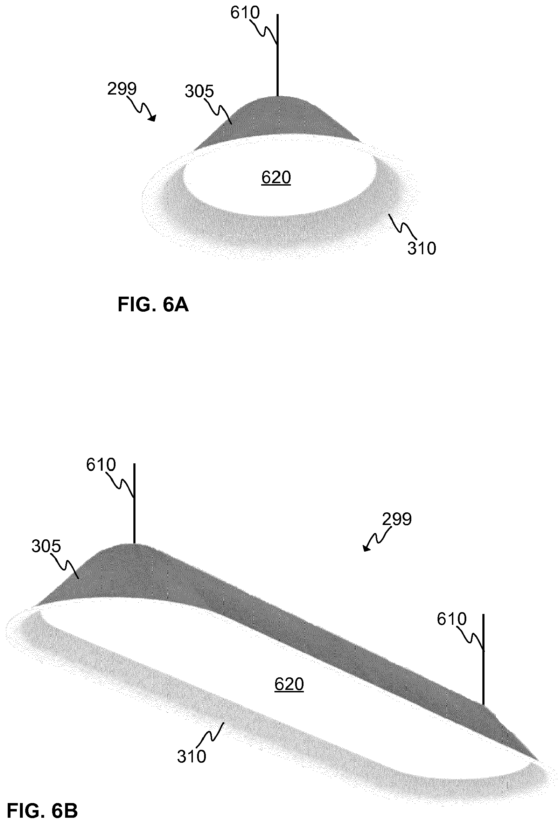

The chair 500 may comprise a separate body part 510, for example, made of plastic, metal or wood, and further a support member 520 for the body part 510 and legs 530. It is clear to a person skilled in the art that elements marked with reference numerals 510, 520 and 530 may be made of as a single-piece object, for example, by injection moulding, or may be made of separate parts and/or materials. According to an embodiment of the present invention, the body part 510 may be omitted and the support member 520 may be directly attached, for example, by mechanical or chemical attaching means, to the body layer 310. The support member may alternatively also be attached to the leather coated 3D object by screws or by bolts and nuts to the support member 520, for example, by having the screws or bolts penetrating through the leather-coated 3D object, thus, becoming visible on the leather coating layer side of the object 299. Figures 6A and 6B illustrate schematically products in which leather-coated 3D objects according to two embodiments of the present invention have been utilized. The 3D objects 299 in the figures are used as lampshades. The lamps may comprise wires 610 and/or conductors 610 for attaching the lamp to the ceiling. As can be seen in Figs. 6A and 6B the leather coating layer 305 is arranged on the opposite side of the body layer 310 when comparing to the 3D object 299, for example, in Fig. 4A. The body layer 310, thus, forms the inner surface of the cavity or recess of the 3D object, i.e., whereto the source of light 620 has arranged in.

According to various embodiments of the present invention, the leather-coated 3D objects 299 according to the present invention may be utilized in automotive products, such as interior parts, lighting devices, such as lamps, transport or carrying equipment, pieces of furniture, such as chairs, armchairs, couch modules, space dividers, etc.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A method for manufacturing a leather-coated three-dimensional object (299), **characterized in that** the method comprises:
- obtaining (110) a body sheet (210) and a leather coating sheet (205),
- heating (120) at least the body sheet (210),
- stacking (130) the heated body sheet (210) and the leather coating sheet (205) to obtain a multilayer structure (225), wherein the stacking comprises arranging an adhesive (220) between the heated body sheet (210) and the leather coating sheet (205),
- inserting (140) the multilayer structure (225) to a form press comprising a mould (230) for three-dimensional forming, and
- forming (150) the inserted multilayer structure (225) by applying a force (240) by the form press to said multilayer structure (225) to form it into a three-dimensional shape defined by the mould (230), wherein the forming comprises stretching the leather coating sheet (205) at least locally at one position for forming the leather coating sheet (205) to the three-dimensional shape, wherein the method comprises, prior to the forming (150),
- heating at least one of the leather coating sheet (205) and the adhesive (220).

2. The method according to claim 1, comprising, prior to the forming (150), heating the stacked multilayer structure (225).

3. The method according to any one of the preceding claims, comprising utilizing a seamless one-piece leather coating sheet (205) for manufacturing the leather-coated three-dimensional object (299).

4. The method according to any one of the preceding claims, wherein the part of the leather coating sheet (205) to be formed has a surface area of at least a fourth of a square meter.

5. The method according to any one of the preceding claims, wherein the depth (245) of a cavity defined by the mould (230) is at least ten centimetres.

6. The method according to any one of the preceding claims, wherein the body sheet (210) comprises at least one of the following: polyester fibres, polyester felt, polyethylene terephthalate felt, polyethylene succinate felt, fibre-reinforced composite.

7. The method according to any one of the preceding claims, wherein the leather coating sheet (205) comprises at least one of the following: leather, artificial leather, hide.

8. A leather-coated three-dimensional object (299) comprising a substantially rigid body layer (310) and a seamless leather coating layer (305), wherein the substantially rigid body layer (310) and the leather coating layer (305) are attached to each other, and a plane (325) defined by the edges of a cavity or recess of the 3D object (299), and a depth (315) of said cavity or recess from said plane (325) of at least 10 centimetres.

9. The leather-coated three-dimensional object (299) according to claim 8, wherein the seamless leather coating layer (305) has a surface area of at least a fourth of a square meter.
